# EUROPEAN PATENT SPECIFICATION

(11) **EP 0 570 174 B1**
(45) Date of publication and mention of the grant of the patent: **07.02.1996**
(21) Application number: 93303584.2
(22) Date of filing: 10.05.1993
(51) Int. Cl.: C08J 9/00

(54) **Process for preparing rigid polyurethane and polyisocyanurate foams**
Verfahren zur Herstellung starrer Polyurethan- und Polyisocyanuratschaumstoffe
Procédé de préparation de mousses rigides de polyuréthane et polyisocyanurate

(30) Priority: 11.05.1992 US 880879
(43) Date of publication of application: 18.11.1993
(73) Proprietor: DOW CORNING CORPORATION, Midland Michigan 48686-0994 (US)
(72) Inventor: Petroff, Lenin James, Bay City, Michigan (US); Thornsberry, James Darryll, Midland, Michigan (US)
(74) Representative: Laredo, Jack Joseph

(56) References cited:
- EP-A- 0 297 614
- EP-A- 0 314 903

## Description

This invention deals with a process for preparing rigid polyurethane and polyisocyanurate foams having enhanced benefits.

Polyurethane foam insulation is an integral component in residential and commercial building insulation systems and virtually all refrigerators and freezers produced today. Thermal insulating performance is particularly uncompromisable in the light of recent federally mandated reductions in applicance energy consumption. As the industry strives for greater energy efficiency it is now faced with a second environmentally driven issue, that being, the attack of fully halogenated chlorofluorocarbons on the earth's protective ozone layer. International agreement to eventually ban these materials means that the use of certain chlorofluorocarbons such as CFC-11, as a common blowing agent for foamed polyurethane and polyisocyanurate foams, must come to an end. As a key step toward that goal, utilization of carbon dioxide from the water-isocyanate reaction in the foaming formulation as a co-blowing agent will likely play an important role in most rigid polyurethane and polyisocyanurate foam applications in the near future.

The most likely approach to using less chlorofluorocarbons is the use of increased amounts of water in the water-isocyanate reaction to produce carbon dioxide as the blowing agent rather than using chlorofluorocarbons.

However, a number of problems are inherent in the use of high levels of water in foamable systems. Most serious is that certain gases trapped in the cured foam cells decrease the insulating performance of foams. As the chlorofluorocarbons are replaced with carbon dioxide this insulating capacity decreases. Carbon dioxide is a much better conductor of heat energy compared to chlorofluorocarbons. Reduced foam flow during processing will also be observed due to the increased resin viscosity obtained with lower levels of chlorofluorocarbons which tend to act as interim solvents in the foaming formulation. The higher resin viscosity will also result in less efficient component mixing. This will in turn result in processing difficulties and coarser-celled foams. Higher levels of water in the foam formulation also leads to more friable foams which exhibit poor adhesion to the appliance cabinet and to facer materials used in laminated foams, a requirement in the use of the foams in refrigerators and freezers and commercial and residential construction applications. Finally, the proclivity of the carbon dioxide to quickly diffuse out of the polyurethane foam formulation puts greater demands on the structural integrity of the foaming polymer. This will often lead to foam shrinkage as the internal cell pressure in the foam drops due to carbon dioxide effusion from the foaming mixture.

EP-A-0314903 describes an improved process for the preparation of siloxane-oxyalkylene copolymers, their use as surfactants in the preparation of urethane foams and the resulting foams obtained therefrom.

These copolymers are prepared by a solvent-less hydrosilation reaction between an organohydrogen-polysiloxane and an uncapped olefinically substituted polyoxyalkylene, in the presence of a carboxylic acid or a carboxylic acid salt.

The process comprises the steps of:
(1) forming a mixture in the absence of a solvent of:
   (a) an organohydrogensiloxane having the average formula:

      RₐH_{b}SiO_{(4-a-b)/2}
   (b) a polyoxyalkylene having the average formula: 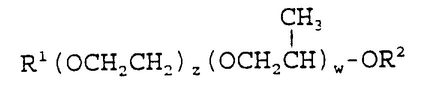 wherein R, R¹, R, a, b, w and z are as hereinafter indicated,
   (c) a carboxylic acid or carboxylic acid salt reaction promoter,
(2) adjusting and maintaining the temperature of the mixture to promote the reaction of the organohydrogensiloxane with the polyoxyalkylene;
(3) adding to the mixture a catalytic amount of a noble metal hydrosilation catalyst,
(4) allowing the reaction to go to completion, and
(5) recovering the copolymer.

The copolymers obtained are used to produce polyurethane foams which are stated to have improved foam height, air flow or foam cell uniformity. The process for making the foam comprises reacting and foaming a reaction mixture which comprises, in addition to the siloxane-oxyalkylene copolymer a polyisocyanate, a polyol, a blowing agent, an urethane foam catalyst and a flame retardant.

EP-A-0297614 also describes an improved process for the preparation of siloxane-oxyalkylene copolymers, their use as surfactants in the preparation of urethane foams and the resulting foams obtained therefrom.

These copolymers are prepared by a hydrosilation reaction between an organohydrogenpolysiloxane and an olefinically substituted polyoxyalkylene, in the presence of a polar high boiling point polyol containing more than one hydroxyl group and, optionally, in the presence of a carboxylic acid salt. The saturated polar high boiling point polyol and carboxylic acid salt not only aid in the preparation of the copolymer, but, if left in the copolymer, aid in the subsequent handling and serve as a necessary component of a composition containing the siloxane-oxyalkylene copolymer.

The process comprises the steps of:
(1) forming a mixture of:
   (a) an organohydrogensiloxane having the average formula:

      RₐH_{b}SiO_{(4-a-b)/2}

      wherein R represents a monovalent hydrocarbon radical, a has a value of from 1 to 3.0, b has a value of from 0 to 1, and the sum of a+b has a value of from 1.0 to 3.0;
   (b) a polyoxalkylene having the average formula: 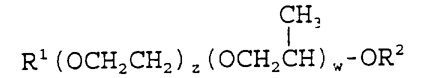 wherein the ethylene oxide and propylen oxide may be blocked or random and where in R¹ is an alkenyl group; R is selected from the group of hydrogen, alkyl, acyl and trialkylsilyl groups; z has a value of from 0 to 70 and w has a value of 0 to 120;
   (c) a liquid, saturated, polar, high boiling point, polyol solvent, and
   (d) optionally a carboxylic acid salt reaction promoter,
(2) maintaining said mixture in an inert atmosphere and adding to said mixture a catalytic amount of a noble metal hydrosilation catalyst,
(3) maintaining the temperature of said mixture between about 20°C and the temperature which does not exceed the temperature at which the high boiling point polyol solvent reacts with said organohydrogensiloxane; and
(4) recovering said surfactant in admixture with residual polyol solvent.

A process is also described for producing a polyurethane foam having improved foam height, air flow and foam cell uniformity which comprises reacting and foaming a reaction mixture comprising, in addition to the organosiloxane copolymer surfactant, a diisocyanate, a polyol, water and an urethane foam catalyst.

The invention disclosed herein seeks to overcome some of the problems in the prior systems for obtaining polyurethane and polyisocyanurate foams having enhanced benefits.

Thus it is an object of this invention to provide system flowability of the reacting foam mixture.

It is a further object of this invention to provide a foam with an insulating capability equal to the foams that are provided by the chlorofluorocarbon blown systems.

Yet another object of this invention is to provide foams having the requisite density for use in insulating applications. Finally, it is an object of this invention to provide a method of preparing polyurethane and polyisocyanurate foams which are easily demolded.

FIGURE 1 is a full view in perspective of the foam flow testing apparatus used in the examples of this invention.

FIGURE 2 is a cross-sectional side view of Figure 1 through line A-A of Figure 1 showing a Dixie® cup in place in the apparatus.

Thus, there is provided herein a process of preparing a rigid polyurethane and polyisocyanurate foam said method comprising: (I) mixing a formulation comprising: (i) at least one reactive diisocyanate; (ii) at least one reactive polyol; (iii) at least one catalyst; (iv) an organic blowing agent; (v) water and (vi) a polyurethane foam additive having the following general formula:

(CH₃)₃SiO{SiO(CH₃)₂}ₓ{SiO(CH₃)R}_{y}Si(CH₃)₃

wherein R is -(CₙH₂ₙ)O(CH₂CH₂O)₁₂R' wherein R' is selected from - (C=O)R", hydrogen and alkyl radicals having 1 to 6 carbon atoms, wherein R" is selected from alkyl radicals having from 1 to 6 carbon atoms, n has a value of 3 to 6, x has a value of 27 to 33, y has a value of 3 to 5; wherein the ratio of x to y is in the range of 5:1 to 12:1 and the amount of organic blowing agent (iv) does not exceed the amount of water (v) in the incipit mixture; and (II) allowing the incipit mixture to react and to cure whereby a rigid polyurethane and polyisocyanurate foam is obtained.

The art is replete with examples of polyurethane foam additives that are based on silicone polymers co-reacted with polyalkyleneoxides. A general class of non-hydrolyzable silicone surfactants based upon copolymers of polydimethylsiloxane and polyalkyleneoxides are those represented by the general formula:

R₃SiO(R₂SiO)ₓ(RR'SiO)_{y}SiR₃

wherein R is generally alkyl and R' represents -(CH₂)ₙO(R")ₐ(R"')_{b}R^{iv}, wherein R' is ethylene oxide units, R"' is propylene oxide units and R^{iv} is an endblocker, and wherein x, y, a, n and b are each the number of repeating units, respectively.

A wide range of properties can be achieved by varying the structural features of these surfactants, as can be witnessed by studying the many patents in this prior art field.

This invention relates to the use of excess water and certain cosely defined surfactant block copolymers of polysiloxanes and polyalkylene oxides in the preparation of rigid polyurethane and polyisocyanurate foams having enhanced physical properties, in which the blocks of polymer are tied together through silicon-carbon bonds. The term "excess water" as used herein means that there is more water in the incipit foamable formulation, in relation to the amount of other ingredients in the foamable formulation, than is normally present in rigid foam formulations.

The surfactants useful in this invention have the general formula:

(CH₃)₃SiO{SiO(CH₃)₂}ₓ{SiO(CH₃)R}_{y}Si(CH₃)₃

wherein R is -(CₙH₂ₙ)O(CH₂CH₂O)₁₂R' and R' is as defined above. For the purposes of this invention, the value of x is 27 to 33 and the value of y is 3 to 5. Surfactants that have values substantially outside of these values do not work well in the process of this invention. For example, when the value of x is below 27, the flow properties of the foam in which the surfactant is used are substantially decreased, while x values above 33 give high flow values, but reduce the structural integrity of the resulting foam. Further, for the purposes of this invention, the ratio of x to y must be in the range of 5:1 to 12:1. Values substantially outside this range do not give the desired rigid foams when excess water is used in the foam formulation as can be observed by a study of the examples herein which compare certain commercial surfactants that are currently used in the manufacture of rigid polyurethane and polyisocyanurate foam in conventional rigid foam formulations.

Small amounts of propylene oxide in the alkylene oxide copolymer can be tolerated but the preferred alkylene oxide for use in this invention is ethylene oxide.

Although the value of n in this invention may vary from 3 to 6 the preferred value of n is 3 or 4, and the most preferred value of n is 3.

For the purposes of this invention, R' may be any radical-(C=O)R", in which R" is selected from alkyl radicals having from 1 to 6 carbon atoms but is preferably methyl, ethyl or butyl, or may be hydrogen or an alkyl radical having 1 - 6 carbon atoms.

The most important aspect of the process of this invention is the blowing agent that is utilized therein. For the purposes of this invention, the amount of water used in the process must exceed the amount of organic blowing agent in the incipit mixture. In this invention, the word "incipit" takes a dictionary meaning and indicates that the amounts of materials in the formulation are those that are put into the missing container before the reaction of the isocyanates with the water and polyol commences.

Also included in the formulation of the process of this invention are conventional foam formulation materials such as reactive diisocyanates, reactive polyols, catalysts, organic blowing agents, among other additives and adjuvants that have been found useful in the art to prepare rigid polyurethane and polyisocyanurate foams.

Thus, the process comprises mixing a formulation comprising conventional rigid foam ingredients such as at least one conventional reactive diisocyanate, at least one conventional reactive polyol, at least one conventional catalyst and at least one conventional organic blowing agent, along with water and the novel surfactants of this invention, wherein as long as the ratio of polydimethylsiloxane units to methyl R siloxane units (x/y) in the surfactant is in the range of 5:1 to 12:1 and, further, provided the amount of water in the incipit mixture of foam ingredients exceeds the amount of organic blowing agent, then the incipit mixture will react and cure and give a rigid polyurethane and polyisocyanurate foam having enhanced physical properties, while the amount of harmful chlorofluorocarbons that are conventionally used in rigid polyurethane foam manufacturing may be reduced.

All of the surfactants used in the examples were prepared by hydrosilylation of the allyloxy or vinyloxy endblocked polyethers, using platinum as the catalyst, according to standard procedures known in the art.

All of the foam formulations used in the examples herein were selected from the following four formulations wherein "pphp" means "parts per hundred polyol", wherein polyol means the organic polyether reactant in each formulation, for example, in (A.) is it Voranol^{R} 490 polyol.

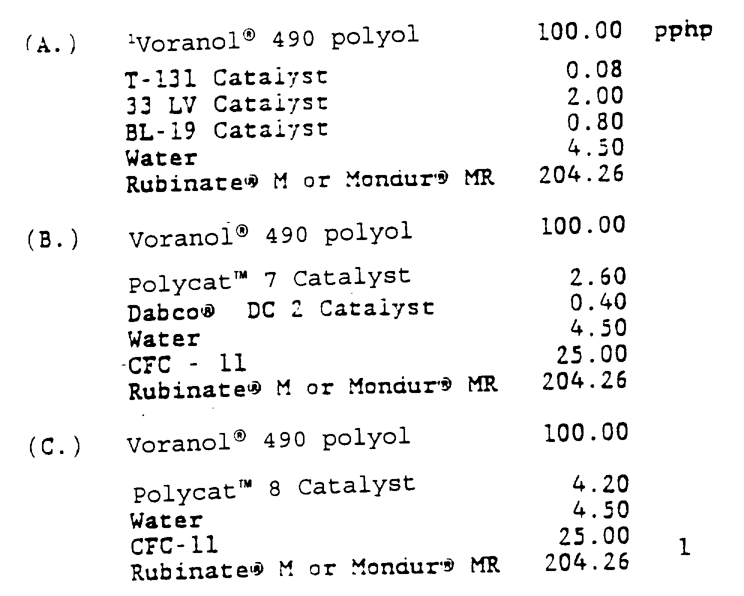

A master batch of polyol, catalyst(s) and water is initially prepared according to the particular foam formulation that is desired. The formulation was prepared in a cappable bottle and then rolled on a ball mill for 1 hour to afford complete mixing of the components. The designated amount of this masterbatch is then added to an 8 oz. (236.8 cc) French square bottle and the appropriate amount of CFC-11 is added. The bottle is capped tightly and the mixture is

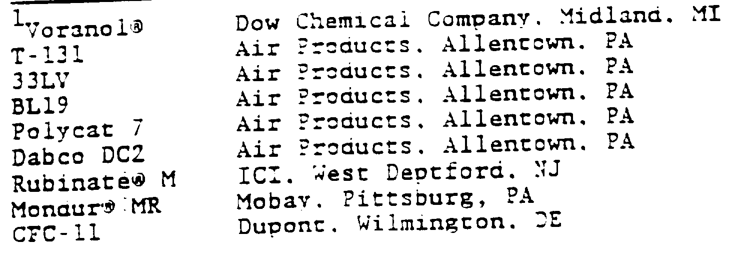

then clamped to and mixed on an air driven wheel apparatus for 20 minutes to complete the preparation of the polyol premix. When completely mixed, the mixture is stored in a 20°C. incubator until it clears.

| Polyol Premix Compositions | | | |
|---|---|---|---|
| | A | B | C |
| Masterbatch | 121.67 gms. | 121.69 gms. | 121.95 gms. |
| CFC-11 | 28.33 gms. | 28.31 gms. | 28.05 gms. |

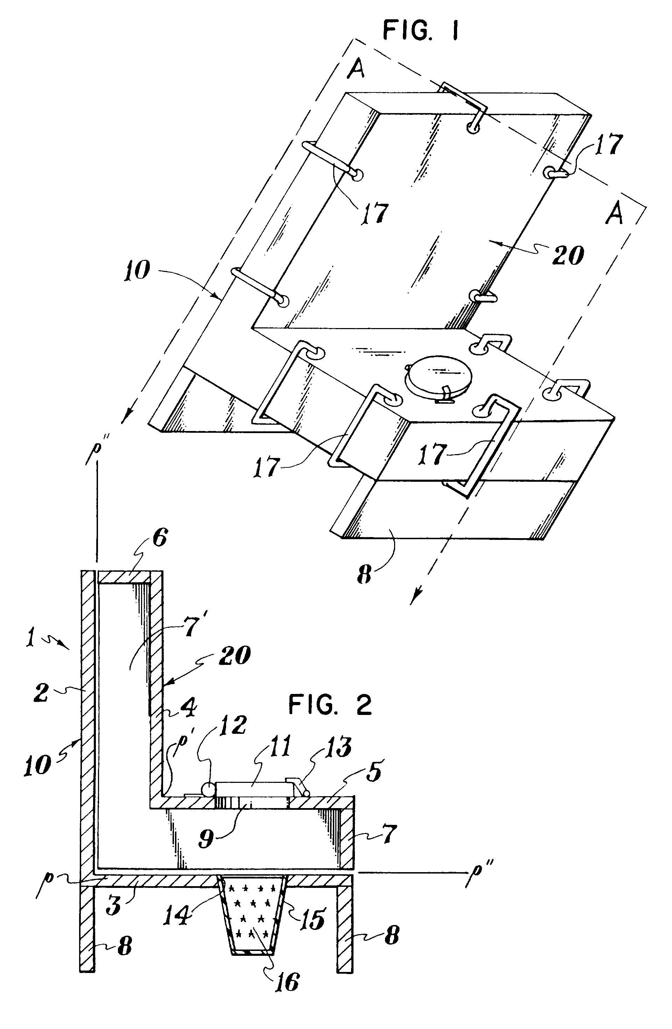

Figure 1 shows a full front view in perspective of the foam flow testing apparatus 1 for the examples used in this invention. The apparatus 1 is essentially a mold to hold and confine a reacting and foaming mixture. With regard to Figure 1, there is shown the segment 10 and the segment 20, further defined below and the clamping system used to hold the apparatus together, wherein the clamps 17 are shown in place.

As shown in Figure 2, the apparatus 1 consists of a back 2 and a bottom 3 which are securely connected together at point P to form a first L-shaped structure 10. A front 4 and top 5 are securely connected together at point P' to form a second L-shaped structure 20 which itself has a top 6 and a front 7 and a side 7'. The apparatus 1 optionally has legs 8 which must be long enough to raise the apparatus 1 from the surface of a table or the like so that the apparatus can be used with a cup holder 15 and a Dixie® cup 16. In the alternative, the apparatus 1 can be used without legs, in a situation where the L-shaped structure 10 is placed on a table or other flat surface with the portion of the L-shaped structure holding the Dixie® cup hanging out over said surface.

The L-shaped surface 20 has through the approximate center of its top 5, a circular hole 9, covered by a hinged cap 11, the hinge designated therein as 12. The cap has a latch 13, which must be strong enough to hold the cap 11 in place during the foaming reaction. The hole 9 is large enough to allow the passage of the cup holder 15 and the Dixie® cup 16 for placement in the hole 14 below.

Shown in Fig. 2 is the second circular hole 14, which is shown in the Figure as containing a cup holder 15 and a Dixie® cup 16. The cup holder 15 is slightly larger at its top than the diameter of the hole 14 and the cup holder 15 is slightly rolled at it's upper edge to make sure that the cup holder 15 does not slip through the hole 14. In use, the segment 10 is fitted to the segment 20 and securely clamped (as indicated in the discussion of Figure 1). The interface of the contact between the two segments is indicated by the line P"-P". The apparatus 1 is then placed in an oven to bring it to the testing temperature.

The 8 oz. (236.8 cc) French square bottle is then removed from the incubator. The L-Panel is placed in close proximity to the mixer used for mixing the ingredients. The panel had, in each case, been preheated in an oven set at 140°C. to keep the reaction temperature constant within the cavity of the panel. The designated amount of polyol premix is then weighed into a 32 oz. (947.2 cc) Dixie® cup. The appropriate amount of surfactant is then added to the cup wherein for the samples herein, 1 gm. of surfactant is equal to 1 pphp. The designated weight of isocyanate is then added to the cup from a tared 250 ml glass beaker. The components are mixed in a 32 oz. (947.22 cc) Dixie® cup for 6 seconds. The cup is then quickly inserted into the hole in the base of the L-panel and is situated such that the cup passes through the hinged opening and the lip of the cup rests inside the mold in the bottom of the base. The hinged door is then closed to contain the rising foam and force it into the open area of the L-panel and vertically.

| Polyol Premix Compositions | | | |
|---|---|---|---|
| Polyol premix | 127.8 | 132.5 | 133.7 |
| Surfactant | (variable - pphp) | | |
| Methylene Diisocyanate | 197.2 | 192.3 | 192.3 |

The foam is allowed to cure for 15 minutes in the mold. The back of the mold is then removed and the foam taken out. The mold is then reinserted in the oven for the next test. The maximum height of the vertical portion of the foam is measured and is an indication of the flow properties of the foaming mass. One hour after the foam has been mixed, a 7 in. x 7 in. x 7 in. (17.8 cm x 17.8 cm x 17.8 cm) square is cut from the center of the vertical leg of the foam. K-factor measurements are made on this sample utilizing an Anacon Model 88 K-factor measuring instrument. Density measurements are also determined from this sample. For this test, one simply cuts a 7" x 7" x 1 1/2" (17.8 cm x 17.8 cm x 3.8 cm) square from the vertical leg of the L-panel and weighs it. The actual length, width and height are measured and the volume calculated according to the formula length x width x height. The weight is then divided the volume to get the density and it is reported in pounds per cubic foot (kilograms per cubic metre).

### Example 1

Four sample surfactants were prepared according to the above, in which samples:
- A =: (CH₃)₃SiO{(CH₃)₂SiO}₃₀(CH₃RSiO)₄Si(CH₃)₃ where R is -(CH₂)₃O(CH₂CH₂O)₁₂(C=O)CH₃
- B =: (CH₃)₃SiO{(CH₃)₂SiO}₂₀(CH₃RSiO)₄Si(CH₃)₃ where R is - (CH₂)₃O(CH₂CH₂O)₁₂(C=O)CH₃
- C =: (CH₃)₃SiO{(CH₃)₂SiO}₃₀(CH₃RSiO)₄Si(CH₃)₃ where R is 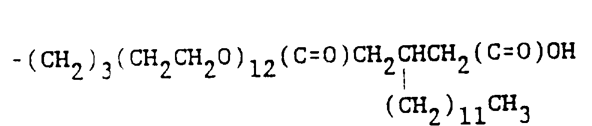
- D =: (CH₃)₃SiO{(CH₃)₂SiO}₉(CH₃RSiO)₄Si(CH₃)₃ where R is -(CH₂)₃O(CH₂CH₂O)₁₂(C=O)CH₃

Sample A is within the scope of this invention. Samples B, C and D are outside the scope of this invention, sample B having only 20 polydimethylsiloxane units and sample D only 9 polydimethylsiloxane units. The samples were tested using three different levels of surfactant so that processing latitude can be observed for sample A as compared with samples B, C and D. The results are on Table I wherein it can be observed that sample A gives beneficial results according to the instant invention.

The K-Factor is expressed in British Thermal Units-in/hour-feet squared-°F. (kJ-mm/hour-m-°C) .

**TABLE I**

| Sample | surfact. level (pphp) | Foam Height (mm) | K-Factor BTu-in/hr-ft°F (kJ-mm/hr-m-°C) |
|---|---|---|---|
| A | 0.4 | 544 | 0.136 (70.584) |
| | 0.8 | 558 | 0.135 (70.065) |
| | 1.2 | 570 | 0.134 (69.546) |
| B | 0.4 | 496 | 0.162 (84.078) |
| | 0.8 | 549 | 0.137 (71.103) |
| | 1.2 | 564 | 0.136 (70.584) |
| C | 0.4 | 515 | 0.144 (74.736) |
| | 0.8 | 525 | 0.139 (72.141) |
| | 1.2 | 525 | 0.138 (71.622) |
| D | 1.2 | 488 | 0.152 (78.888) |

### Example 2

Several commercial surfactants that are used for rigid polyurethane and polyisocyanurate foam preparation were prepared and used in the excess water foam formulation set forth herein. This example uses a standard siloxane polymer for the surfactants while varying the polyether structure to show the effect of the polyether on the resulting foam. None of the surfactants shown in this example falls within the scope of the invention; however, this example illustrates that conventional commercial surfactants are not useful in this invention and,further, this example illustrates that one cannot just match the polyether structure of the surfactants of the instant invention and gain the advantages of the use of the surfactants in the process of the instant invention.

The siloxane polymer used herein was (CH₃)₃SiO{(CH₃)₂SiO}₉(CH₃RSiO)₄Si(CH₃)₃ wherein the values of 9 and 4 are averages.

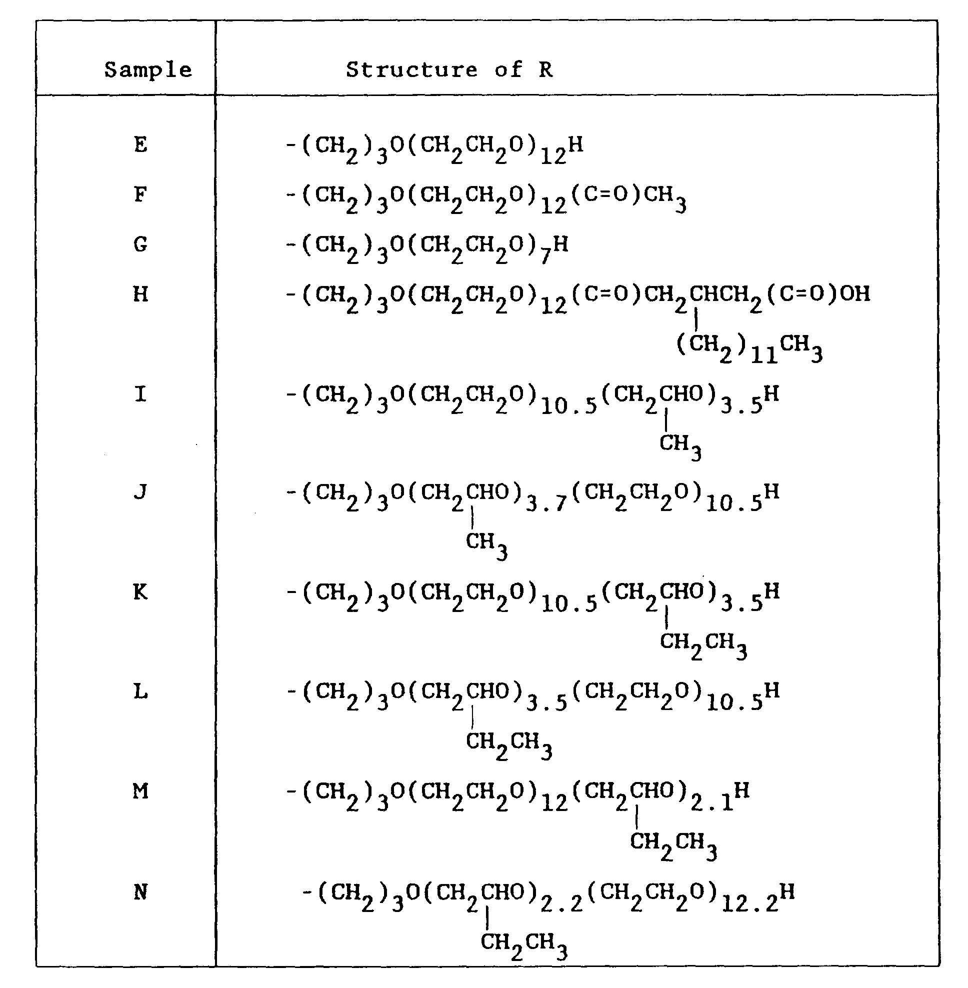

Using these surfactants in the foam testing, the results following on TABLE II were obtained. These results clearly show that one cannot merely emulate the polyether segment of the commercial rigid polyurethane surfactants and get the desired results in the excess water foam formulation.

**TABLE II**

| SAMPLE | K-FACTOR | | DENSITY | |
|---|---|---|---|---|
| | (btu-in/hr-ft-°F) (kJ-mm/hr-m-°C) | | (pcf) | (kg/m³) |
| E | 0.155 | (80.445) | 1.32 | (21.1) |
| F | 0.277 | (143.763) | 1.32 | (21.1) |
| G | 0.162 | (84.078) | 1.30 | (20.8) |
| H | 0.165 | (85.635) | 1.34 | (21.5) |
| I | 0.173 | (89.787) | 1.30 | (20.8) |
| J | 0.186 | (96.534) | 1.30 | (20.8) |
| K | 0.158 | (82.002) | 1.29 | (20.7) |
| L | 0.166 | (86.154) | 1.31 | (21.0) |
| M | 0.165 | (85.635) | 1.30 | (20.8) |
| N | 0.176 | (91.344) | 1.30 | (20.8) |

surfactants shown in this example fallswithin the scope of the invention; however, this example illustrates that conventional commercial surfactants are not useful in this invention and,further, this example illustrates that one cannot just match the polysiloxane structure of the surfactants of the instant invention and gain the advantages of the use of the surfactants in the process of the instant invention. The polyether polymer R used in this example was -(CH₂)₃O(CH₂CH₂O)₁₂(C=O)CH₃. The siloxanes are set forth in TABLE III. Samples O, R and U are replications of the same siloxane structure to get a statistical expression for the repeatability of the surfactant's performance in the test procedures.

**TABLE III**

| SAMPLE | STRUCTURE | MOL. WEIGHT |
|---|---|---|
| O | (CH₃)₃SiO{(CH₃)₂SiO}₃₀(CH₃RSiO)₁₁Si(CH₃)₃ | 3048 |
| P | (CH₃)₃SiO{(CH₃)₂SiO}₂₀(CH₃RSiO)₄Si(CH₃)₃ | 1886 |
| Q | (CH₃)₃SiO{(CH₃)₂SiO}₄₀(CH₃RSiO)₄Si(CH₃)₃ | 3368 |
| R | (CH₃)₃SiO{(CH₃)₂SiO}₃₀(CH₃RSiO)₁₁Si(CH₃)₃ | 3048 |
| S | (CH₃)₃SiO{(CH₃)₂SiO}₂₀(CH₃RSiO)₁₈Si(CH₃)₃ | 2727 |
| T | (CH₃)₃SiO{(CH₃)₂SiO}₄₀(CH₃RSiO)₁₈Si(CH₃)₃ | 4210 |
| U | (CH₃)₃SiO{(CH₃)₂SiO}₃₀(CH₃RSiO)₁₁Si(CH₃)₃ | 3048 |

Using these surfactants in the foam testing, the results following on TABLE IV were obtained. These results clearly shown that one cannot merely emulate the polysiloxane segment of the commercial rigid polyurethane surfactants and get the desired results in the excess water foam formulation.

**TABLE IV**

| SAMPLE | K-FACTOR | | DENSITY | | HT. mm |
|---|---|---|---|---|---|
| | (btu-in/hr-ft-°F) (kJ-mm/hr-m-°C) | | (pcf) | (kg/m³) | |
| O | 0.152 | (78.888) | 2.11 | (33.8) | 513 |
| P | 0.137 | (71.103) | 2.02 | (32.4) | 582 |
| Q | 0.138 | (71.622) | 2.05 | (32.8) | 568 |
| R | 0.158 | (82.002) | 2.19 | (35.1) | 495 |
| S | 0.240 | (124.56) | 3.30 | (52.9) | 300 |
| T | 0.162 | (84.078) | 2.68 | (42.4) | 394 |
| U | 0.165 | (85.635) | 2.22 | (35.6) | 488 |

### Example 4

Several additional surfactants were prepared to evaluate the type of endcapping that could be tolerated on the polyether segment. The surfactants used a standard polysiloxane having the formula:

(CH₃)₃SiO{(CH₃)₂SiO}₂₀(CH₃RSiO)₄Si(CH₃)₃

The polyether segments were varied in these examples and they had the formulae set forth in TABLE V. Especial note should be made of the capping groups on the polyethers.

Using these surfactants in the foam testing, the results following on TABLE VI were obtained. These results clearly show that one cannot merely emulate the endcapping segment of the commercial rigid polyurethane surfactants and get the desired results in the excess water foam formulation.

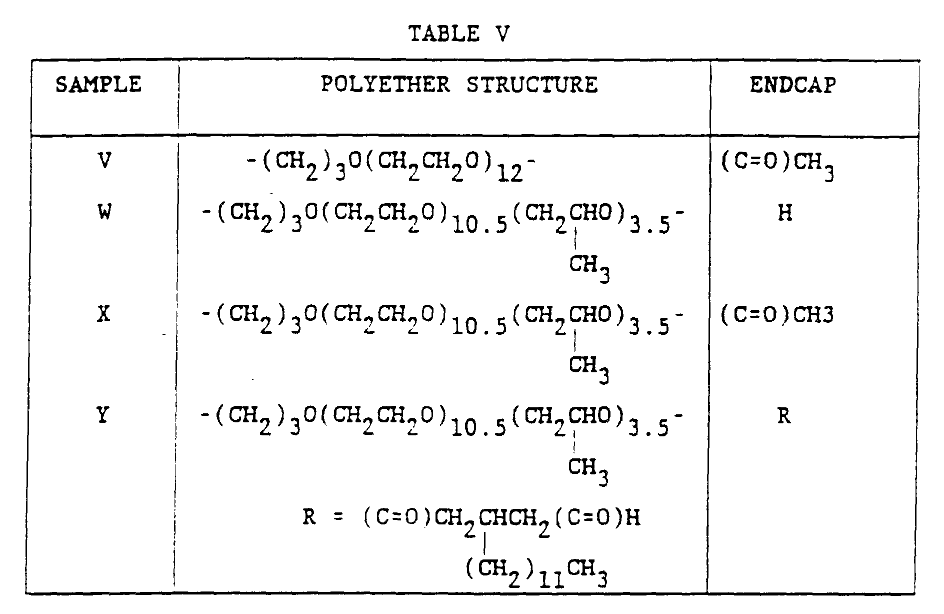

**TABLE VI**

| SAMPLE | K-FACTOR | | DENSITY | | FLOW (mm) |
|---|---|---|---|---|---|
| | (btu-in/hr-ft-°F) (kJ-mm/hr-m-°C) | | (pcf) | (kg/m³) | |
| V | 0.134 | (69.546) | 2.02 | (32.4) | 553 |
| W | 0.141 | (73.179) | 2.12 | (34.0) | 506 |
| X | 0.140 | (72.66) | 2.11 | (33.8) | 522 |
| Y | 0.137 | (71.103) | 2.07 | (33.2) | 516 |

### Example 5

A comparison of commercial surfactant E from TABLE I above was made against a surfactant prepared within the scope of the claims i-.e. surfactant A, in the three foam formulations set forth above in the FOAM FORMULATIONS section. The results are found on TABLE VII.

**TABLE VII**

| | FOAM FLOW (mm) | | | FOAM K-FACTOR (btu-in/hr-ft-°F) (kJ-mm/hr-m-°C) | | | FOAM DENSITY (pcf) (kg/m³) | | |
|---|---|---|---|---|---|---|---|---|---|
| SAMPLE | FOAM FORM | | | FOAM FORM | | | FOAM FORM | | |
| | (A.) (B.) (C.) | | | (A.) (B.) (C.) | | | (A.) (B.) (C.) | | |
| A | 605 | 596 | 618 | 0.124 | 0.147 | 0.144 | 1.96 | 1.99 | 1.99 |
| | | | | (64.356) | (76.293) | (74.736) | (31.36) | (31.84) | (31.84) |
| | | | | | | | | | |
| E | 503 | 492 | 520 | 0.150 | 0.153 | 0.175 | 2.07 | 2.07 | 2.14 |
| | | | | (77.85) | (79.407) | (90.825) | (33.12) | (33.12) | (34.24) |

## Claims

1. A process of preparing a rigid polyurethane and polyisocyanurate foam said method comprising:
(I) mixing a formulation comprising:
(i) at least one reactive diisocyanate;
(ii) at least one reactive polyol;
(iii) at least one catalyst;
(iv) an organic blowing agent;
(v) water and
(vi) a polyurethane foam additive having the following general formula:
(CH₃)₃SiO{SiO(CH₃)₂}ₓ{SiO(CH₃)R}_{y}Si(CH₃)₃
wherein R is -(CₙH₂ₙ)O(CH₂CH₂O)₁₂R' wherein R' is selected from -(C=O)R", hydrogen and alkyl radicals having from 1 to 6 carbon atoms and R" is selected from alkyl radicals having from 1 to 6 carbon atoms, n has a value of 3 to 6, x has a value of 27 to 33 and y has a value of 3 to 5, and wherein the ratio of x to y is in the range of 5:1 to 12:1 and the amount of organic blowing agent (iv) does not exceed the amount of water (v) in the incipit mixture; and
(II) allowing the incipit mixture to react and cure, whereby a rigid polyurethane and polyisocyanurate foam having an enhanced system flow and K-factor values are obtained.

## Patentansprüche

1. Verfahren zur Herstellung eines harten Polyurethan und Polyisocyanurat-Schaumes, bei dem man
(I) eine Formulierung mischt, welche enthält:
(i) mindestens ein reaktives Diisocyanat;
(ii) mindestens ein reaktives Polyol;
(iii) mindestens einen Katalysator;
(iv) ein organisches Treibmittel;
(v) Wasser und
(vi) einen Polyurethanschaum-Zusatzstoff mit der folgenden allgemeinen Formel:
(CH₃)₃SiO[SiO(CH₃)₂]ₓ[SiO(CH₃)R]_{y}Si(CH₃)₃ ,
in der R für den Rest -(CₙH₂ₙ)O(CH₂CH₂O)₁₂R' steht, in dem R' ausgewählt ist aus dem Rest -(C=O)R", Wasserstoff und Alkylresten mit 1 bis 6 Kohlenstoffatomen, wobei R" ausgewählt ist aus Alkylresten mit 1 bis 6 Kohlenstoffatomen, und in dem n einen Wert von 3 bis 6 hat; in der x einen Wert von 27 bis 33 und y einen Wert von 3 bis 5 hat und in der das Verhältnis von x zu y im Bereich von 5:1 bis 12:1 liegt; wobei die Menge des organischen Treibmittels (iv) die Menge des Wassers (v) in der Ausgangsmischung nicht übersteigt; und
(II) das Ausgangsgemisch reagieren und härten läßt, wodurch man harte Polyurethan- und Polyisocyanurat-Schäume mit verbessertem Systemfluß und verbessertem K-Wert erhält.

## Revendications

1. Un procédé de préparation d'une mousse rigide de polyuréthanne et polyisocyanurate, ledit procédé consistant à :
(I) mélanger une formulation comprenant :
(i) au moins un diisocyanate réactif ;
(ii) au moins un polyol réactif ;
(iii) au moins un catalyseur ;
(iv) un agent gonflant organique ;
(v) de l'eau et
(vi) un additif pour mousse de polyuréthanne, répondant à la formule générale suivante :
(CH₃)₃SiO{SiO(CH₃)₂}ₓ{SiO(CH₃)R}_{y}Si(CH₃)₃
dans laquelle R est -(CₙH₂ₙ)O(CH₂CH₂O)₁₂R' où R' est choisi parmi -(C=O)R", l'hydrogène et les radicaux alkyles ayant 1 à 6 atomes de carbone et R" est choisi parmi les radicaux alkyles ayant 1 à 6 atomes de carbone, la valeur de n est 3 à 6, la valeur de x est de 27 à 33 et la valeur de y est de 3 à 5, et dans laquelle le rapport de x à y se situe dans l'intervalle de 5:1 à 12:1, et la quantité d'agent gonflant organique (iv) ne dépasse pas la quantité d'eau (v) dans le mélange initial ; et
(II) laisser le mélange initial réagir et durcir, ce qui donne une mousse rigide de polyuréthanne et polyisocyanurate ayant des valeurs améliorées d'écoulement du système et de facteur K.
